# EUROPEAN PATENT SPECIFICATION

(11) **EP 1 846 208 B1**
(45) Date of publication and mention of the grant of the patent: **18.03.2009**
(21) Application number: 06709593.5
(22) Date of filing: 31.01.2006
(51) Int. Cl.: B29B 17/00

(54) **METHOD FOR TREATMENT AND RECOVERY OF WASTE**
VERFAHREN ZUR BEHANDLUNG UND WIEDERVERWERTUNG VON ABFALL
METHODE DE TRAITEMENT ET RECUPERATION DE DECHETS

(30) Priority: 31.01.2005 GB 0501864; 03.02.2005 US 649784 P
(43) Date of publication of application: 24.10.2007
(73) Proprietor: Medical Waste Solutions Limited, Preston Farm Industrial Estate Stockton on Tees Cleveland TS18 3RB (GB)
(72) Inventor: AYLMORE, Peter Roger, North Devon EX34 0PE (GB)
(74) Representative: Lambert, Ian Robert
(86) International application number: PCT/GB2006/000311
(87) International publication number: WO 2006/079842

(56) References cited:
- DE-A1- 4 118 858
- FR-A- 2 842 111
- PATENT ABSTRACTS OF JAPAN vol. 010, no. 270 (M-517), 13 September 1986 (1986-09-13) & JP 61 094705 A (HUMAN IND CORP), 13 May 1986 (1986-05-13)
- PATENT ABSTRACTS OF JAPAN vol. 2002, no. 04, 4 August 2002 (2002-08-04) & JP 2001 341129 A (NATSUHARA KOGYO KK), 11 December 2001 (2001-12-11)

## Description

This invention relates to the treatment and recovery of waste and is especially, although not wholly, concerned with the treatment of clinical waste and with the recovery of various materials from the treated waste for reuse.

Hospitals worldwide generate many millions of tonnes of clinical waste annually. In UK alone, England and Wales produce about 250,000 tonnes of clinical waste a year, with 100,000 tonnes of that presenting greater than normal risk of infection. Clinical waste contains diverse amounts of diverse materials, that of western countries generally containing a preponderance of plastics materials with various quantities of paper, cotton, rubber and metals constituting the vast majority of the balance. Compared to general waste, the raw waste does, of course, additionally present a serious health hazard in that it typically is contaminated by human body fluids and body waste as well as pathogenic and potentially infectious elements such as surgical dressings and discarded syringe needles.

The term clinical waste' is used herein broadly to define waste containing a mixture of thermoplastic and non-thermoplastic materials that includes controlled waste arising from the treatment of humans and animals and is capable of causing infection or other harm. It includes human and animal tissues, blood, surgical dressings, syringes, surgery implements, microbiological cultures, bodily waste and some pharmaceutical products. Reference is directed to the definition of clinical waste contained in the UK Controlled Waste Regulations 1992, although other related waste materials and mixes are not excluded, and indeed it will be appreciated that the invention is not limited to clinical waste per se.

Clinical waste is a controlled waste and therefore subject to rigorous requirements as to its disposal, with producers of clinical waste being legally obliged to pass the waste to a registered waste carrier. Present day disposal systems involve incineration or landfill. On-site incineration has accounted for a very considerable amount of clinical waste disposal but is an expensive option since the large plastics content of the waste produces toxic combustion products which require costly treatment before any atmospheric release. The costs therefore make it uneconomic for most hospitals to incinerate on site. Also, although incineration does not require separate sterilisation of the waste, it does not result in the recovery of any recyclable materials in the waste.

Landfill does, of course, require the clinical waste to be subjected to prior sterilisation in order to render the waste safe. Conventional steam sterilisation involves exposure of shredded waste to steam temperatures of 116°C for 45 minutes or more. Unfortunately, the condensed steam constitutes up to 25% of the weight of the sterilised waste and landfill charges are generally based upon tonnage. An alternative is dry sterilisation by tumbling the shredded waste under vacuum in a heated chamber at about 160°C for 45 minutes or so. There is a significant cost or tax payable on landfill, and to these are added the costs of transporting of the waste from the originator to the sterilising facility, and thence to the landfill site. Furthermore, landfill sites are becoming fewer and more environmentally unacceptable and legislative changes are increasingly promoting material recycling in order to eliminate environmental pollution and to present natural resources.

A process and a device for recycling thermoplastic waste is disclosed in DE-A-4118858.

The present invention has been developed with the disadvantages associated with the conventional methods of clinical waste very much in mind and with the view of converting economically realistic quantities of the waste into easily disposable materials, and ideally into material which has commercial value such that its disposal provides a revenue.

The present invention addresses the problem of how to dispose of a potentially hazardous and/or infectious waste material whilst reducing direct and indirect processing and transport costs, to provide a more economic and environmentally friendly disposal mode.

According to the invention there is provided a method of professing waste containing an amount of thermoplastic material and an amount of non-thermoplastic material as constituent materials to produce an output material capable of being used as an ingredient or component in a subsequent manufacturing process, said method comprising the steps of:-
increasing the temperature of the waste by introducing thermal energy into said waste;
supplying said waste to a densifier to cause densification of the waste and heat transfer contact between the constituent materials such that the thermoplastic material softens to at least partially surround said non-thermoplastic material, and
extruding the densifier waste to produce an extruded material;
in which at least a portion of the thermal energy introduced into said waste is introduced in a heating step which takes place before the step of supplying said waste to the densifier, and wherein said heating step includes the external application of heat including exposing said waste to steam.

In this arrangement, the waste is exposed to heat to minimise or reduce the hazard posed thereby and the densification step causes the thermoplastic material at least partially to surround the non-thermoplastic material to provide a generally homogenous product which is then output in extruded form. Where there are residual non-sterile elements in the mixture before the densification process the heat generated thereby and the intimate heat exchange contact between the non-thermoplastic and the thermo-plastics materials can help to reduce further or remove the bacterial, viral, pharmacological or chemical hazard.

In a preferred embodiment, the waste is clinical waste, such as that produced by medical institutions, e.g. hospitals, in which instance the thermoplastic materials are softened to at least partially surround, preferably to substantially completely surround, said non-thermoplastic materials at least partially to reduce at least one of the bacterial, viral, pharmacological or chemical hazard of the waste. Thus, the hazards associated with potentially troublesome waste materials such as pharmaceuticals can be reduced or eliminated. However, other types of waste, such as waste produced on board an aeroplane or other vessel, or catering waste, might be processed. Generally the waste contains between 1 and 50%, typically more than 10%, most typically more than 30% plastics, by dry weight.

Preferably, the process is such as to render the waste into a sterile form by the end of the process. By "sterilisation" it is meant a process that conforms to the State and Territorial Association on Alternative Treatment Technology (STAATT) level 4 sterilisation standard (a 6LOG10 reduction in bacterial activity).

Advantageously, the densification step removes substantially all of the moisture present in the waste supplied to the densifier to provide a dry extruded material. Typically, the weight of moisture removed in the densification step corresponds to around 10-25%, most typically about 20%, of the weight of the waste supplied to the densifter.

The temperature of the waste is increased by introducing thermal energy into said waste. Depending on the particular application, a significant proportion of the thermal energy introduced into the waste in said introducing step is associated with the high pressures generated and applied to the waste during the densification action. However, additional heating is applied before (and, optionally, during) the densification step. In particular, at least a portion of the thermal energy introduced into said waste is introduced in a heating step which takes place before the step of supplying said waste to the densifier. The heating step may be performed at an elevated pressure.

The method includes exposing the waste to steam, typically as part of a sterilisation step. Pressurised steam may be used. In some instances however the waste may have been exposed to a sterilisation step before a method of the invention is carried out

Where a steam sterilisation step is included, and the waste is cooled or allowed to cool thereafter, the method preferably includes a step of removing an amount of steam condensate and associated soluble materials from the waste. The removal of the condensate may be by wringing out or compressing the waste or by applying vacuum to express an amount of steam condensate. This may be carried out before or as part of the densification step.

Advantageously, the heating step is performed in a rotating autoclave. The rotating motion enhances the breakdown and mixing of the components of the waste. Plastic bags, in particular, are effectively broken down thereby releasing items of waste stored therein. Preferably, the rotating autoclave includes at least one blade like member. Suitable rotating autoclaves are manufactured by Tempico of Louisiana, USA under the name Rotoclave (RTM) and are described in international patent publication number WO 93/23167.

Preferably, the heating step is performed so as to at least partially, preferably completely sterilise the waste. A rotating autoclave device is particularly preferred in this regard.

Irrespective of the extent of sterilisation performed in the heating step which takes place before the step of supplying the waste to the densifier, it is preferred that the densification step sterilises the waste. Essentially complete sterilisation (100% reduction of bacteria) may be achieved during the densification step owing to the high temperature and pressure.

Preferably the waste is sterilised or otherwise treated by contacting same with a fluid in a treatment step which takes place before the step of supplying said waste to the densifier. The fluid may be a gas or a liquid. As discussed *supra* the waste may be sterilised by contacting the same with steam. Alternatively, the waste may be sterilised by contacting same with SO₃. Conveniently, the SO₃ is produced by an *in-situ* generator as part of an on-demand system. Other useful sterilising agents include turpenes. Such sterilisation processes might be performed instead of or in addition to the steam treatment.

The treatment with the fluid may be for a purpose other than sterilisation, such as improving the cohesive properties of the waste. Treatment with SO₃ may be used for this purpose.

It is preferred that the treatment with the fluid is performed in a rotating autoclave device which is also used for the heating step.

Although in some instances at the outset the waste may already be in a form in which the thermoplastic materials and the non-thermoplastic materials are distributed through the waste, the method may include the step of mixing the waste to distribute the thermoplastic materials and the non-thermoplastic materials prior to supply to said densifier.

Likewise, although in some instances the item or particle size of the waste may already be suitable prior to performing a method of this invention, the method may include the step of shredding or comminuting the waste prior to supply to the densifier. It is preferred that the step of shredding or comminuting the waste takes place after a prior heating or sterilisation step, for example performed in a rotating autoclave.

An alkaline material, preferably calcium oxide, may be added to the waste before or during the densification of the waste. The alkaline material can act as a desiccant, can suppress the deleterious effects of PVC degradation when PVC is present in the waste, and may act to reduce the number of any micro organisms present in the densifier waste or even to eliminate same.

Preferably, one or more parameters associated with densifier waste are measured, and a densification of the waste is controlled in accordance with the measurements of the one or more parameters. Parameters can include temperature, pressure, density, a physical or material property of the densifier waste, or a property of the densifier. Advantageously, the parameter is the torque applied by the densifier to the densifier waste. Suitable sensors positioned at suitable locations in the densifier might be used to perform the measurements. In preferred embodiments, the step of extruding the densifier waste includes passing said densifier waste to a valve, and the densification is controlled by controlling the operation of said valve. Alternatively, the densification may be controlled by controlling other control parameters, such as the rate of the feed of the waste into the densifier or the operation of the densifier. Typically, the densification of the waste is controlled using a microprocessor. Open loop or closed loop control may be employed.

Advantageously, data relating to the measurements of the one or more parameters associated with densifier waste are recorded in a form allowing subsequent review of the densification process and/or the nature of the densifier waste. In this way, data logging for subsequent retrieval is accomplished, allowing e.g. medical institutions to demonstrate that waste has been processed according to accepted standards.

Although for some applications, the extruded material is usable in that form, it is preferred to size reduce it. For example, the extruded material may be chopped or shredded to produce pellets which are more suitable for transport and storage.

The extruded product, whether in chopped or unchopped form, can be used in many applications; in a particular application the chopped product is used as a filler to fill a space between two walls of a plastics moulded product.

The step of size reducing the extruded material may comprise pelletising, shredding or, preferably, micronising the extruded material. Micronising generally involves reducing the particle size to below 1mm. The step of size reducing the extruded material may be performed underwater. Techniques for micronising a material underwater have been developed by Vektory GmbH of Buxtehude, Germany. Reference is also made to International Publication WO 2005/002817. A particular advantage with such embodiments is that the water treatment deodorises the waste. Other advantages include the ability to separate particles according to the material obtained therein: in particular, stainless steel can be removed easily because of the large density difference between stainless steel and other constituents of the waste. Furthermore, high processing speeds are possible, and improved particle homogeneity is obtained. The micronised material is particularly well suited for use in a manufacturing process such as a moulding or extrusion process. Articles such as board or sheet may be produced in this way.

Thus, the method may comprise the further step of manufacturing an article using the extruded material. The step of manufacturing an article may comprise a moulding or extrusion process which uses the extruded material.

In another aspect, there is provided a method of processing clinical waste containing an amount of thermoplastic material and an amount of non-thermoplastic material as constituent materials to produce an output material capable of being used as an ingredient or component in a subsequent manufacturing process, said method comprising the steps of:
increasing the temperature of the clinical waste;
supplying said clinical waste to a densifier to cause densification of the clinical waste and heat transfer contact between the constituent materials such that the thermoplastic materials soften to at least partially surround said non-thermoplastic materials; and
extruding the densifier clinical waste to produce an extruded material.

In another aspect still, there is provided a method of processing clinical waste containing an amount of thermoplastic material and an amount of non-thermoplastic material as constituent materials to at least partially reduce at least one of the bacterial, viral, pharmacological or chemical hazard of said waste to allow transport and subsequent disposal thereof, said method comprising the steps of:
increasing the temperature of the clinical waste;
supplying said clinical waste to a densifier to cause densification of the clinical waste and heat transfer contact between the constituent materials such that the thermoplastic materials soften to at least partially surround said non-thermoplastic materials; and
extruding the densified waste to produce an extruded material.

The disposal may include use of the extruded material as an ingredient or component in a subsequent manufacturing process.

The method may comprise the steps of:-
shredding or otherwise comminuting said waste to reduce the size of the items in the waste;
mixing said waste before, during or after said shredding or comminuting to distribute the components of said waste;
applying heat to said waste to exert a sterilising effect;
passing said waste to a densifier to expose said material to an elevated temperature and pressure to cause the plastic material in said waste to soften and melt and to surround or encapsulate said non-plastic material to exert a thermal sterilising effect thereon, and
extruding said material through an extrusion aperture to form a densified extruded product in the form of a plastics material matrix in which said non-plastics materials are dispersed.

The method may comprise the steps of:
sterilising the waste with steam at a temperature of at least 100°C, preferably greater than 130°C, and for a period of time of at least 15 minutes;
shredding the waste thereby to produce shredded material;
cooling the sterilised material having a water content of 5 to 15% by weight and compressing the cooled material thereby to separate water from the waste;
heating the compressed material, preferably to a temperature in the range 180 to 210°C, decompressing the compressed material and thereafter venting gas from the decompressed material; and
cooling and recovering the treated waste.

preferably, the steam is at a pressure of at least 45 psi (310 kPa).

The recovered treated waste is a dry semi-homogenous and dense material which could be containerised in preparation for transportation to a landfill site or to a facility at which it can be recycled into a manufacturing process.

The waste constituting the starting material for the methods of the invention will have a composition which may vary greatly on a day-to-day basis and which is likely to depend also upon the particular source of the waste. For example, many hospitals and similar institutions specialise in particular complaints and diseases and will generate waste of a particular nature. On an average basis, clinical waste tends to contain ca 10 - 50% by weight plastic materials, 20% water and the balance made up of a mixture of various types of paper, cotton, adhesives, rubber materials and some metallic materials, generally stainless steel.

In a preferred embodiment, the waste is placed into a sterilisation chamber which will operate on a batch basis. The sterilization chamber will usually consist of a drum which will rotate at a low speed and slowly tumble the waste during the sterilisation process in order to ensure that none of the waste will escape the sterilisation temperature. The drum may contain internal vanes or baffles to assist in constant turning and mixing of the shredded material. Other types of sterilisation chamber may be used provided, of course, that they permit proper and thorough sterilisation of the waste under the sterilisation conditions envisaged.

Sterilisation will generally require a temperature of at least 140°C, preferably about 160°C or higher, for a period of up to about 1 hour, for example 40 to 50 minutes. The required temperature is preferably achieved by admitting high pressure steam into the sterilisation chamber. High pressure steam has the advantage that, in appropriate quantities, it is able rapidly to raise the temperature to that required for proper sterilisation and is capable of easily and thoroughly penetrating the waste in order to ensure complete sterilisation.

At the end of the required sterilisation period, the pressure in the sterilisation chamber can be released and the sterilised contents cooled to ambient temperature and passed to an agglomeration or densification stage. At this point, the sterilised waste will generally have a water content of about 8 to 12%.

In certain implementations of this aspect of the invention, the waste may be shredded in order to reduce the waste to a more uniform size and to render any especially large items of waste into a smaller and more easily managed form. Where this is done, it will generally be sufficient to reduce the waste to a size of ca.10 to 50 mm, preferably about 30 mm. Generally, shredding occurs after the sterilisation step.

Preferably, the agglomeration or densification stage involves compressing and heating the waste in order to eliminate the water and to "plasticize" various components of the waste thereby to render the waste suitable for further use. Initially, the sterilised and cooled shredded waste will be discharged from the batch-operating sterilisation chamber into a silo and then fed on a continuous basis into the agglomerator or densifier. Continuous feed from the silo can be via a vertically mounted frustoconical feeder screw to a horizontally or vertically mounted agglomerator or densifier screw. Immediately downstream of the point of entry of the shredded and sterilised waste into the agglomerator or densifier, the root of the agglomerator or densifier screw enlarges to create a squeezing action,on the waste to expel some of its moisture content through a perforated wall of the agglomerator or densifier barrel. The expressed water, together with soluble materials wherein and any entrained solid particles is sterile and can be allowed to enter a foul drainage system.

Typically, as the waste material continues along the barrel of the agglomerator or densifier it continues to be compressed and is subjected to a degree of frictional heating. This frictional heating is supplemented by additional heaters around or within the agglomerator or densifier barrel which raise the compressed waste to a temperature of 180 to 200°C. The pressure within the agglomerator or densifier in this high temperature zone will typically be elevated. Under these high temperature and raised pressure conditions, many of the plastics materials contained in the waste will begin to "plasticize", that is to say it seems that they begin to break down into lower molecular weight polymeric structures which appear to adopt a degree of fluidity sufficient to form a viscous coating on the fibrous material content within the waste.

Preferably, the material is then decompressed or depressurised, for example by reducing the screw root, and simultaneously allowing any gas or steam to vent through a vacuum opening. Thereafter, the compression/heating/decompression/venting sequence may be repeated at least once as the waste material continues to travel along the barrel of the agglomerator or densifier. The vented material may be passed to a lower pressure tank of cooling water and thence to foul drainage. Alternatively it may be vented to atmosphere.

The agglomerated or densified material exiting the end of the agglomerator or densifier barrel is a dry solid with a semi-homogenous consistency and form and has a volume which be as little as 15% or so of the original clinical waste. The solid material may be chopped into coarse lumps of, say, 5 to 10 cm diameter and then milled to a size at which it is free flowing, for example 10 to 15 mm. It may then be bagged or otherwise containerised for transport to a landfill site or a recycling facility.

The final product is a relatively dense material (200 to 500 kg/m³) which makes an excellent filler for injection molded plastics material. In this connection, the material is compatible for molding purposes with most thermoplastic and thermosetting polymeric materials, is non-reactive under the molding and processing conditions employed and is environmentally safe and inert.

In a particular preferred arrangement, the final product is used as a filler material in a powder injection moulding process as described in international patent publication No. WO 02/062550.

### Examples

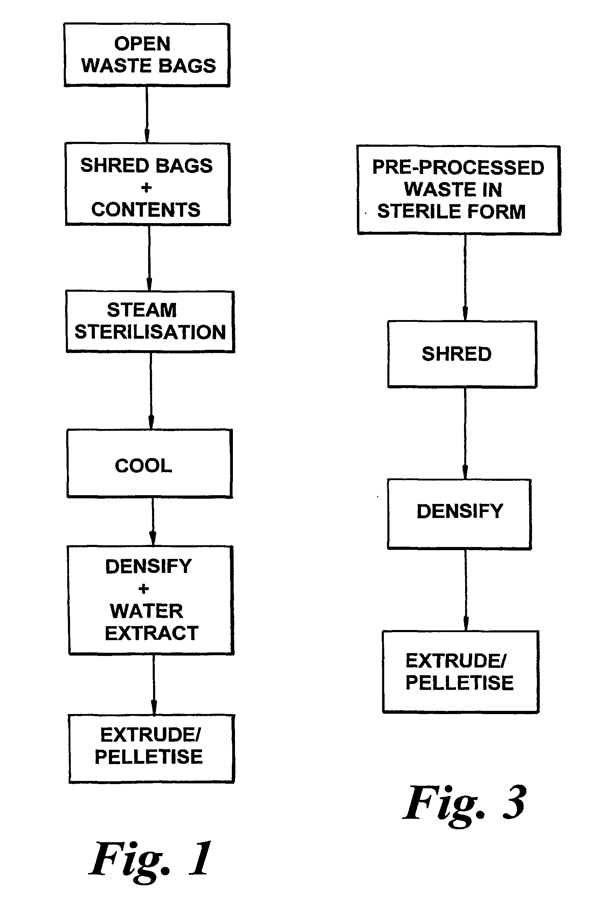

For a further understanding of this invention, certain examples will now be described in detail, reference being made to the accompanying drawings, in which:-
Figure 1 is a block diagram of a first example of a process of this invention;
Figure 2 is a schematic view of a densifier for use in the examples;
Figure 3 is a block diagram of a second example of this invention, and
Figure 4 is a schematic diagram of a third example of this invention.

Three examples are described, in the first and third of which clinical waste is delivered in the form as received from the originating organisation, that is contained in plastic bag form (bin bags) with the contents possibly slightly compacted but otherwise not broken down. In the second example the medical input has been pre-processed by an apparatus of the type described and shown in international patent publication number WO93/23167, into a form in which the waste items have been exposed to a sterilising stage.

### Example 1

The waste is passed to a sterilising vessel in a batch, and the material is exposed to high temperature steam, preferably at a pressure of 45 psi (310 kPa) or greater, so that the temperature of the material is raised to at least 130°C for a period of 15 to 60 minutes, preferably 40 to 50 minutes.

Bags of the clinical waste are opened up by the sterilising process and the contents are subsequently shredded to reduce the waste to a more uniform size and to render any larger items to a more manageable size. The typical average particle size is in the range of 10 to 50 mm.

The shredded and steamed material is then passed to a densifier or agglomerator.

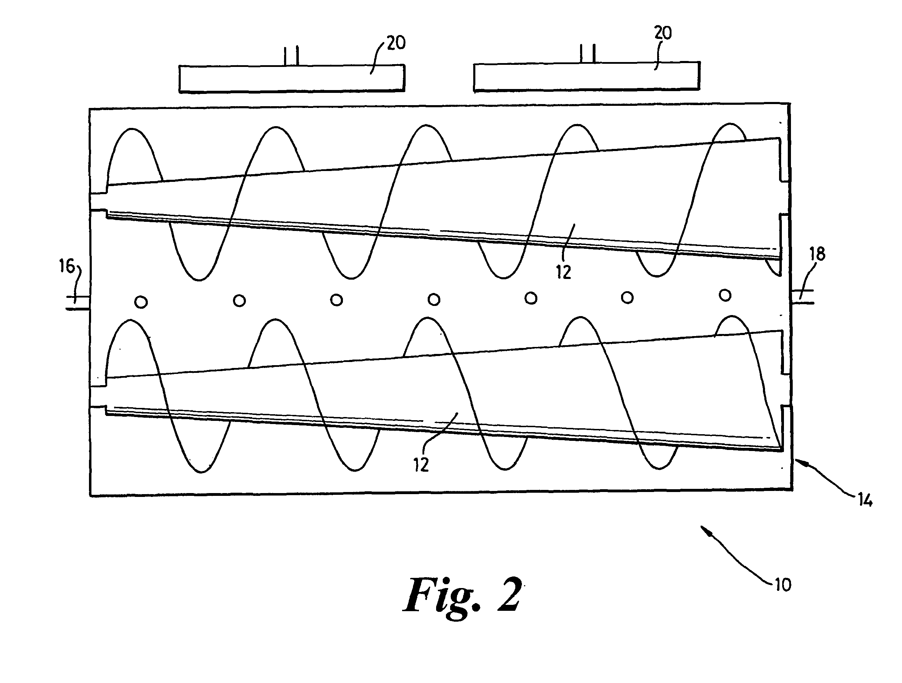

The densifier 10 is illustrated substantially in Figure 2 and comprises two horizontally mounted augers 12 mounted in a housing 14 having an inlet 16 and an outlet 18. The roots of the augers increase in diameter between the inlet and the outlet of the densifier so that, as the material is passed into the densifier, it is drawn in and subjected to a high pressure. The material is then extruded through a nozzle at the outlet to form a generally homogenous sterile product. The treated product can then be chopped to form pellets.

### Example 2

In this Example the pre-processed waste introduced into the process has already been rendered sterile by a process such as that described in international patent publication number WO 93/23167.

The pre-processed clinical waste is then shredded and then supplied to a densifier of the type described above. As in the previous example, the application of very high pressure, plus the optional external application of heat, produces a generally homogenous extruded output comprising finely divided non-thermoplastic material dispersed in a thermoplastic material, which can be chopped to reduce it to pellet form.

In some applications it may be possible to omit the shredding stage as the combination of pre-processing the waste and then supplying it to the densifier may be sufficient to produce a sterile extruded product having the material characteristics to enable it to be used as a filler material. In this way, should a large metal foreign object such as a hip-joint have passed undetected into the waste and the waste processor, it can be removed from the densifier without having caused significant damage, by opening the casing of the densifier.

### Example 3

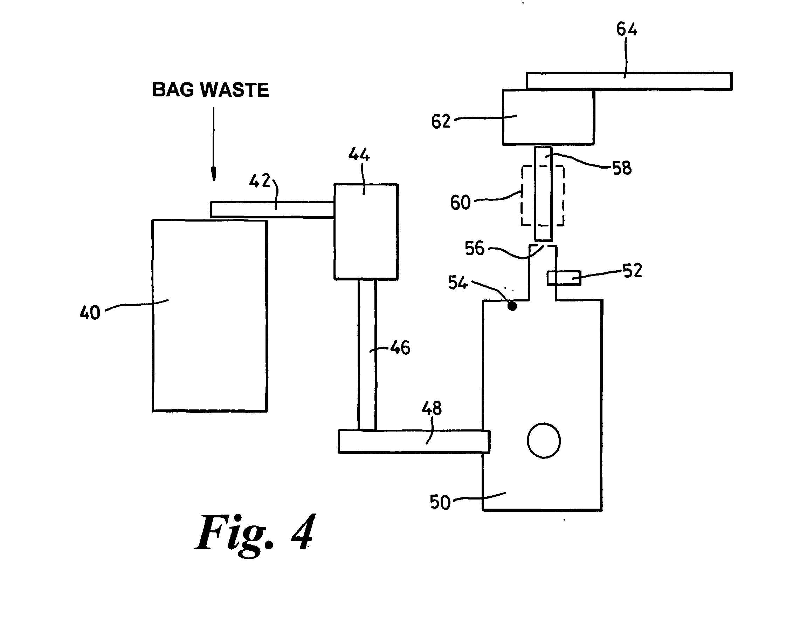

Figure 4 shows an arrangement which is highly suited to the processing of clinical wastes from medical institutions such as hospitals. The arrangement comprise a rotary autoclave 40 into which clinical waste is inputted. Typically, the clinical waste is contained in plastic bags, although it should be noted that the invention can be performed on waste supplied in various forms, for example waste contained in sealed containers or 'sharps' containers. Suitable rotary autoclaves are manufactured by Tempico of Louisiana, USA under the name Rotoclave (RTM); descriptions of suitable devices can be found in international patent publication number WO 93/23167. The waste is at least partially sterilised by exposure to high temperature, pressurised steam. A consequence of this treatment is that the plastics bags in which the waste is contained are broken down, a process that is facilitated if the rotary autoclave 40 is provided with internal blade-like members. After treatment in the rotary autoclave 40, the treated waste is transported on conveyor 42 to a shredder 44. It is preferred that the shredder 44 is disposed downstream of the rotary autoclave, since this has the advantage that the shredder 44 is exposed to sterilised waste. Thus, should workmen require access to the shredder 44 for servicing or repair purposes, there is no risk of exposure to contaminated clinical waste. However, it is at least in principle possible to instead dispose the shredder 44 upstream of the rotary autoclave 40. The shredder 44 may be equipped with a screen or other sizing means for separating out objects which exceed a predetermined size. Such objects may be recycled separately. Further conveyors 46 and 48 transport the sterilised and shredded waste to a densifier 50. The waste can be introduced to the densifier 50 through an aperture disposed in an upper surface of the densifier 50. Densifiers are available commercially, and examples of manufactured by OMC (Saronno, Italy) and Promec. A preferred form of densifier is manufactured by OMC and comprises two tapered augers of the type generally described above in respect of Figure 2. It should be noted that, depending on the precise application envisaged, other forms of densifier might be used. For example densifiers having a single screw or auger or greater than two screws or augers might be employed. In all cases, tapering or non-tapering screws or augers might be utilised.

Advantageously, calcium oxide is added to the chemical waste in an appropriate dosage. The calcium oxide acts as a desiccant, and also suppresses by-products of the degradation of any PVC present in the waste. It is possible that the calcium oxide might also act to reduce the number of any microorganisms present in the waste or even sterilise the waste, should this be necessary. The densification process causes heating of the clinical waste. The heat generated by the densification process can be used for a variety of useful purposes, such as to provide heating elsewhere in the institution in which the processing apparatus is located, to produce steam for use in the rotary autoclave, or to generate useful energy such as electrical energy. The heating process in the densifier 50 causes evaporation or water in the clinical waste, resulting in the evolution of steam. The evolved steam can be used for the above described useful purposes.

The densifier 50 comprises a control valve 52 which controls the exit of the product from the densifier 50. Disposed in the exit region of densifier 50 is a temperature sensor 54. Advantageously, temperature measurements are made by temperature sensor 54, and the data collected are used to control the operation of the control valve 52. Thus, for example, if the clinical waste is not undergoing treatment at sufficient temperature for a sufficient time, the control valve 52 can be closed or partially dosed, resuming in an increased time and temperature profile. Conveniently, a gate arrangement is utilised in which a slider is translated so as to restrict an outlet to a desired extent. Other parameters relating to the densification process might be monitored and used as a basis for a control of this densification process. For example, pressure, a physical characteristic of the densifier waste, or a material characteristic of the densifier waste might be monitored. The control of the densification process can be controlled with a microprocessor (not shown) as part of a closed loop or open loop (feedback) control system. The product is extruded through an outlet 56, and transported on a conveyor 58, optionally through a cooling zone 60, to a shredder device 62. The shredded product is then transported on a conveyor 64 for subsequent treatment on site or, more likely, to a removal point for transportation to an offsite location.

The arrangement shown in Figure 4 and variants thereof is highly effective in processing clinical waste. The system is capable of use in treating prescription medicines. A further advantage of such systems is that they have a relatively small footprint.

## Claims

1. A method of processing waste containing an amount of thermoplastic material and an amount of non-thermoplastic material as constituent materials to produce an output material capable of being used as an ingredient or component in a subsequent manufacturing process, said method comprising the steps of:
increasing the temperature of the waste by introducing thermal energy into said waste;
supplying said waste to a densifier to cause densification of the waste and heat transfer contact between the constituent materials such that the thermoplastic materials soften to at least partially surround said non-thermoplastic materials; and
extruding the densified waste to produce an extruded material;
in which at least a portion of the thermal energy introduced into said waste is introduced in a heating step which takes place before the step of supplying said waste to the densifier, and wherein said heating step includes the external application of heat including exposing said waste to steam.

2. A method according to claim 1 in which the waste is clinical waste and the thermoplastic materials are softened to at least partially surround said non-thermoplastic materials at least partially to reduce at least one of the bacterial, viral, pharmacological or chemical hazard of said waste.

3. A method according to claim 2 in which the thermoplastic materials are softened to substantially completely surround said non-thermoplastic materials at least partially to reduce at least one of the bacterial, viral, pharmacological or chemical hazard of the waste.

4. A method according to any one of claims 1 to 3, wherein at least a portion of the thermal energy introduced into said waste in said introducing step is associated with the densification action.

5. A method according to any one of claims 1 to 4 in which the heating step is performed at an elevated pressure.

6. A method according to any one of claims 1 to 5, wherein said waste is cooled or allowed to cool after said exposure to steam, and an amount of steam condensate is removed from said waste.

7. A method according to claim 6, wherein said condensate is removed by compressing said waste to express an amount of steam condensate.

8. A method according to claim 7 in which the step of compressing said waste is performed during the densification step.

9. A method according to any previous claim in which the heating step is performed in a rotating autoclave device.

10. A method according to any previous claim in which the heating step is performed so as to at least partially sterilise the waste.

11. A method according to claim 10 in which the heating step is performed so as to completely sterilise the waste.

12. A method according to any previous claim in which said waste is sterilised or otherwise treated by contacting same with a fluid in a treatment step which takes place before the step of supplying said waste to the densifier.

13. A method according to claim 12 in which said waste is sterilised by contacting same with steam.

14. A method according to claim 12 or claim 13 in which said waste is sterilised by contacting same with SO₃.

15. A method according to any preceding claim, which includes the step of mixing said waste to distribute the thermoplastic materials and the non-thermoplastic materials priors to supply to said densifier.

16. A method according to any preceding claim, which includes the step of shredding or comminuting said waste prior to supply to said densifier:

17. A method according to any preceding claim, wherein the waste is initially already in a shredded or comminuted form.

18. A method according to any preceding claim in which an alkaline material, preferably calcium oxide, is added to the waste before or during the densification of the waste.

19. A method according to any preceding claim in which one or more parameters associated with the densifier waste are measured, and the densification of the waste is controlled in accordance with the measurements of the one or more parameters.

20. A method according to claim 19 in which the step of extruding the densifier waste includes passing said densifier waste through a valve, and the densification is controlled by the operation of said valve.

21. A method according to claim 19 or claim 20 in which data relating to the measurements of the one or more parameters associated with the densifier waste are recorded in a form allowing subsequent review of the densification process and/or the nature of the densifier waste.

22. A method according to any of the preceding claims, further comprising the step of size reducing said extruded material.

23. A method according to claim 22 in which the step of size reducing said extruded material comprises pelletising, shredding or preferably micronising the extruded material.

24. A method according to claim 22 or claim 23 in which the step of size reducing said extruded material is performed underwater.

25. A method according to any preceding claim comprising the further step of using the extruded material in the manufacture of an article.

26. A method according to claim 25 in which the step of manufacturing an article comprises a moulding or extrusion process which uses the extruded material.

## Patentansprüche

1. Verfahren zur Behandlung von Abfall, der einen Anteil thermoplastisches Material und einen Anteil nicht-thermoplastisches Material als Bestandteil enthält, um ein Ausgangsmaterial zu erzeugen, das als Zugabe oder Komponente in einem nachfolgenden Herstellungsverfahren Verwendung findet, umfassend die folgenden Schritte:
Erhöhen der Temperatur des Abfalls durch Einleitung thermischer Energie in den Abfall; Zuführen dieses Abfalls zu einem Verdichter, um eine Verdichtung des Abfalls zu bewirken sowie einen Wärmeübergangkontakt zwischen den Materialbestandteilen, so daß die thermoplastischen Materialien erweichen, um wenigstens teilweise die nicht-thermoplastischen Materialien zu umgeben; und Extrudieren des verdichteten Abfalls zur Erzeugung eines extrudierten Materials; wobei wenigstens ein Teil der in den Abfall eingeleiteten thermischen Energie in einem Erwärmungsschritt eingeführt wird, der stattfindet, bevor der Abfall dem Verdichter zugeführt wird, und wobei dieser Erwärmungsschritt die äußere Anwendung von Wärme beinhaltet, zu der gehört, daß der Abfall Dampf ausgesetzt wird.

2. Verfahren nach Anspruch 1, **dadurch gekennzeichnet, daß** der Abfall klinischer Abfall ist, und daß die thermoplastischen Materialien so erweicht werden, daß sie wenigstens teilweise die nicht-thermoplastischen Materialien umgeben, um wenigstens teilweise für wenigstens eine der bakteriellen, viralen, pharmakologischen oder chemischen Gefahren des Abfalls zu verringern.

3. Verfahren nach Anspruch 2, **dadurch gekennzeichnet, daß** die thermoplastischen Materialien erweicht werden, so daß sie im wesentlichen vollständig die nicht-thermoplastischen Materialien umgeben, um wenigstens teilweise wenigstens eine der bakteriellen, viralen, pharmakologischen oder chemischen Gefahren des Abfalls zu verringern.

4. Verfahren nach einem der Ansprüche 1 bis 3, **dadurch gekennzeichnet, daß** wenigstens ein Teil der thermischen Energie, die in den Abfall während des Einleitungsschrittes eingeführt wird, mit der Verdichtungsarbeit verbunden ist.

5. Verfahren nach einem der Ansprüche 1 bis 4, **dadurch gekennzeichnet, daß** der Erwärmungsschritt bei einem erhöhten Druck ausgeführt wird.

6. Verfahren nach einem der Ansprüche 1 bis 5, **dadurch gekennzeichnet, daß** der Abfall, nachdem er dem Dampf ausgesetzt worden ist, gekühlt wird oder ihm ermöglicht wird, sich abzukühlen, und daß ein Anteil des Dampfkondensats von dem Abfall entfernt wird.

7. Verfahren nach Anspruch 6, **dadurch gekennzeichnet, daß** das Kondensat durch Verpressen des Abfalls entfernt wird, so daß ein Anteil des Dampfkondensats ausgepreßt wird.

8. Verfahren nach Anspruch 7, **dadurch gekennzeichnet, daß** der Schritt des Zusammenpressens des Abfalls während des Verdichtungsschritts durchgeführt wird.

9. Verfahren nach einem der vorhergehenden Ansprüche, **dadurch gekennzeichnet, daß** der Erwärmungsschritt in einer rotierenden Autoklaveneinrichtung durchgeführt wird.

10. Verfahren nach einem der vorhergehenden Ansprüche, **dadurch gekennzeichnet, daß** der Erwärmungsschritt so durchgeführt wird, daß der Abfall wenigstens teilweise sterilisiert wird.

11. Verfahren nach Anspruch 10, **dadurch gekennzeichnet, daß** der Erwärmungsschritt so durchgeführt wird, daß der Abfall vollständig sterilisiert wird.

12. Verfahren nach einem der vorhergehenden Ansprüche, **dadurch gekennzeichnet, daß** der Abfall sterilisiert oder auf andere Weise behandelt wird, indem er in einem Behandlungsschritt mit einem Fluid in Berührung gebracht wird, wobei dieser Behandlungsschritt stattfindet, bevor der Abfall dem Verdichter zugeführt wird.

13. Verfahren nach Anspruch 12, **dadurch gekennzeichnet, daß** der Abfall **dadurch** sterilisiert wird, daß er mit Dampf in Berührung gebracht wird.

14. Verfahren nach Anspruch 12 oder 13, **dadurch gekennzeichnet, daß** der Abfall sterilisiert wird, indem er mit SO₃ in Berührung gebracht wird.

15. Verfahren nach einem der vorhergehenden Ansprüche, **dadurch gekennzeichnet, daß** der Schritt der Vermischung des Abfalls zur Verteilung der thermoplastischen Materialien und der nicht-thermoplastischen Materialien vor der Zuführung zu dem Verdichter stattfindet.

16. Verfahren nach einem der vorhergehenden Ansprüche, **dadurch gekennzeichnet, daß** der Abfall geschreddert oder zerkleinert wird, bevor er dem Verdichter zugeführt wird.

17. Verfahren nach einem der vorhergehenden Ansprüche, **dadurch gekennzeichnet, daß** der Abfall anfänglich in einer bereits geschredderten oder zerkleinerten Form vorliegt.

18. Verfahren nach einem der vorhergehenden Ansprüche, **dadurch gekennzeichnet, daß** vor oder während der Verdichtung des Abfalls ein alkalisches Material, vorzugsweise Kalziumoxid, dem Abfall zugesetzt wird.

19. Verfahren nach einem der vorhergehenden Ansprüche, **dadurch gekennzeichnet, daß** ein oder mehrere Parameter, die zu der Abfallverdichtung gehören, gemessen werden, und daß die Verdichtung des Abfalls gemäß den Messungen des einen oder der mehreren Parameter gesteuert wird.

20. Verfahren nach Anspruch 19, **dadurch gekennzeichnet, daß** zu dem Schritt der Extrusion des Verdichtungsabfalls gehört, daß der Verdichtungsabfall durch ein Ventil geschickt wird und die Verdichtung durch die Betätigung dieses Ventils gesteuert wird.

21. Verfahren nach Anspruch 19 oder 20, **dadurch gekennzeichnet, daß** Daten, die sich auf die Messungen des einen oder der mehreren Parameter beziehen, welche zu dem Verdichtungsabfall gehören, in einer Form aufgezeichnet werden, die später die erneute Betrachtung des Verdichtungsverfahrens und / oder der Art des Verdichterabfalls ermöglicht.

22. Verfahren nach einem der vorhergehenden Ansprüche, **gekennzeichnet durch** den weiteren Schritt der Reduzierung der Größe des extrudierten Materials.

23. Verfahren nach Anspruch 22, **dadurch gekennzeichnet, daß** der Schritt der Größenreduzierung des extrudierten Materials die Pelletisierung, Schredderung oder das bevorzugte Zerkleinern des extrudierten Materials umfaßt.

24. Verfahren nach Anspruch 22 oder 23, **dadurch gekennzeichnet, daß** der Schritt der Größenreduzierung des extrudierten Materials unter Wasser durchgeführt wird.

25. Verfahren nach einem der vorhergehenden Ansprüche, **gekennzeichnet durch** den weiteren Schritt der Verwendung des extrudierten Materials für die Herstellung eines Gegenstandes.

26. Verfahren nach Anspruch 25, **dadurch gekennzeichnet, daß** der Schritt der Herstellung eines Gegenstandes einen Spritzguß- oder Extrusionsprozeß umfaßt, der das extrudierte Material verwendet.

## Revendications

1. Procédé de traitement de déchets contenant une quantité de matière thermoplastique et une quantité de matière non-thermoplastique comme matières constitutives pour produire une matière de sortie capable d'être utilisée comme ingrédient ou composant dans un procédé de fabrication ultérieur, ledit procédé comprenant les étapes consistant à :
- augmenter la température des déchets par introduction d'énergie thermique dans lesdits déchets ;
- adresser lesdits déchets à un densificateur pour provoquer une densification des déchets et un contact de transfert thermique entre les matières constitutives de telle sorte que les matières thermoplastiques ramollissent pour au moins partiellement entourer lesdites matières non-thermoplastiques ; et
- extruder les déchets densifiés pour produire une matière extrudée ;
au moins une fraction de l'énergie thermique introduite dans lesdits déchets étant introduite dans une étape de chauffage qui a lieu avant l'étape d'introduction desdits déchets dans le densificateur, et ladite étape de chauffage comprenant l'application externe de chaleur comprenant l'exposition dudit déchet à de la vapeur d'eau.

2. Procédé selon la revendication 1, dans lequel les déchets sont des déchets cliniques et les matières thermoplastiques sont ramollies pour au moins partiellement entourer lesdites matières non-thermoplastiques pour réduire au moins partiellement au moins l'un des risques bactériens, viraux, pharmacologiques ou chimiques desdits déchets.

3. Procédé selon la revendication 2, dans lequel les matières thermoplastiques sont ramollies pour entourer sensiblement complètement lesdites matières non-thermoplastiques pour réduire au moins partiellement au moins l'un des risques bactériens, viraux, pharmacologiques ou chimiques des déchets.

4. Procédé selon l'une quelconque des revendications 1 à 3, dans lequel au moins une fraction de l'énergie thermique introduite dans lesdits déchets dans ladite étape d'introduction est associée avec l'action de densification.

5. Procédé selon l'une quelconque des revendications 1 à 4, dans lequel l'étape de chauffage est effectuée à une pression élevée.

6. Procédé selon l'une quelconque des revendications 1 à 5, dans lequel lesdits déchets sont refroidis ou amenés à refroidir après ladite exposition à la vapeur d'eau, et une quantité de condensat de vapeur d'eau est retirée desdits déchets.

7. Procédé selon la revendication 6, dans lequel ledit condensat est retiré par compression desdits déchets pour exprimer une quantité de condensat de vapeur d'eau.

8. Procédé selon la revendication 7, dans lequel l'étape de compression desdits déchets est effectuée pendant l'étape de densification.

9. Procédé selon l'une quelconque des revendications précédentes, dans lequel l'étape de chauffage est effectuée dans un dispositif d'autoclave rotatif.

10. Procédé selon l'une quelconque des revendications précédentes, dans lequel l'étape de chauffage est effectuée de façon à au moins partiellement stériliser les déchets.

11. Procédé selon la revendication 10, dans lequel étape de chauffage est effectuée de façon à stériliser complètement les déchets.

12. Procédé selon l'une quelconque des revendications précédentes, dans lequel lesdits déchets sont stérilisés ou autrement traités par mise en contact de ceux-ci avec un fluide dans une étape de traitement qui a lieu avant l'étape d'introduction desdits déchets dans le densificateur.

13. Procédé selon la revendication 12, dans lequel lesdits déchets sont stérilisés par mise en contact de ceux-ci avec de la vapeur d'eau.

14. Procédé selon la revendication 12 ou la revendication 13, dans lequel lesdits déchets sont stérilisés par mise en contact de ceux-ci avec SO₃.

15. Procédé selon l'une quelconque des revendications précédentes, qui comprend l'étape de mélange desdits déchets pour répartir les matières thermoplastiques et les matières non-thermoplastiques avant de les adresser audit densificateur.

16. Procédé selon l'une quelconque des revendications précédentes, qui comprend l'étape de fragmentation ou de broyage fin desdits déchets avant de les adresser audit densificateur.

17. Procédé selon l'une quelconque des revendications précédentes, dans lequel les déchets sont initialement déjà sous une forme fragmentée ou finement broyée.

18. Procédé selon l'une quelconque des revendications précédentes, dans lequel une matière alcaline, de préférence de l'oxyde de calcium, est ajoutée aux déchets avant ou pendant la densification des déchets.

19. Procédé selon l'une quelconque des revendications précédentes, dans lequel un ou plusieurs paramètres associés aux déchets de densificateur sont mesurés, et la densification des déchets est contrôlée conformément aux mesures du ou des paramètres.

20. Procédé selon la revendication 19, dans lequel l'étape d'extrusion des déchets de densificateur comprend le passage desdits déchets de densificateur à travers une soupape, et la densification est contrôlée par l'actionnement de ladite soupape.

21. Procédé selon la revendication 19 ou la revendication 20, dans lequel des données se rapportant aux mesures du ou des paramètres associés aux déchets de densificateur sont enregistrées dans une forme permettant un examen ultérieur du procédé de densification et/ou de la nature des déchets de densificateur.

22. Procédé selon l'une quelconque des revendications précédentes, comprenant en outre l'étape de réduction de la dimension de ladite matière extrudée.

23. Procédé selon la revendication 22, dans lequel l'étape de réduction de dimension de ladite matière extrudée comprend la pelletisation, la fragmentation ou, de préférence, la micronisation de la matière extrudée.

24. Procédé selon la revendication 22 ou la revendication 23, dans lequel l'étape de réduction de dimension de ladite matière extrudée est effectuée sous l'eau.

25. Procédé selon l'une quelconque des revendications précédentes, comprenant l'étape ultérieure d'utilisation de la matière extrudée dans la fabrication d'un article.

26. Procédé selon la revendication 25, dans lequel l'étape de fabrication d'un article comprend un procédé de moulage ou d'extrusion qui utilise la matière extrudée.
